# EUROPEAN PATENT APPLICATION

(11) **EP 1 912 412 A1**
(43) Date of publication of application: **16.04.2008**
(21) Application number: 06782081.1
(22) Date of filing: 01.08.2006
(51) Int. Cl.: H04L 29/08

(54) **SERIAL SIGNAL TRANSMISSION SYSTEM**

(30) Priority: 03.08.2005 JP 2005225253
(71) Applicant: NEC Corporation, Minato-ku Tokyo 108-8001 (JP)
(72) Inventor: NAWATA, Hizuru, c/o NEC Corporation, Tokyo 108-8001 (JP); SOMA, Shintaro, c/o NEC Corporation, Tokyo 108-8001 (JP); HOSHINA, Koji, c/o NEC Corporation, Tokyo 108-8001 (JP); YONEYAMA, Yuzo, c/o NEC Corporation, Tokyo 108-8001 (JP)
(74) Representative: Vossius & Partner
(86) International application number: PCT/JP2006/315203
(87) International publication number: WO 2007/015480

(57) **Abstract**

A transmission device includes signal synthesizer 16 that replaces the least significant bits of a plurality of transmission and reception target data that are digital signals with bit data of a desired control signal that is a digital signal, and serial signal converter 17 that converts the output signal from the signal synthesizer into a serial signal and transmits the serial signal. On the other hand, a reception device includes parallel signal converter 21 that converts the received serial signal into a parallel signal to acquire transmission and reception target data, and signal separator 23 that extracts the bit data of the control signal from the respective least significant bits of transmission and reception target data output by parallel signal converter 21.

## Description

### TECHNICAL FIELD

The present invention relates to a serial signal transmission system that is suitably used for an internal interface in a radio base station apparatus provided in a mobile communication system.

### BACKGROUND ART

In recent years, two types of standard specifications have been formulated for internal interfaces in radio base station apparatuses provided in a mobile communication system. One of the two types of standard specifications is CPRI (Common Public Radio Interface) and the other is OBSAI (Open Base Station Architecture Initiative). Both types of specifications have been voluntarily formulated by the industry. Related companies have been promoting development of apparatuses including internal interfaces conforming to these specifications. The two types of specifications allow the serial transfer of digitalized baseband signals between a radio section and a baseband processing section both of which are provided in the radio base station apparatus.

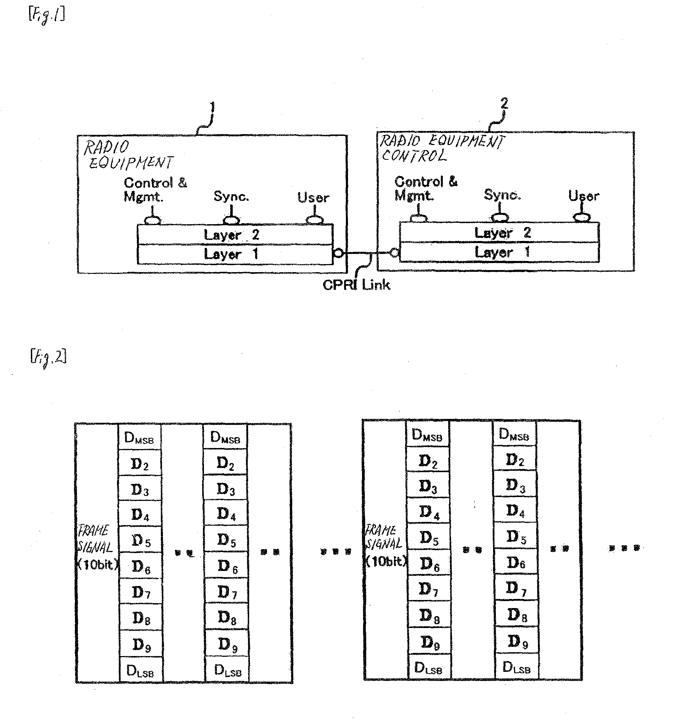

Fig. 1 shows the configuration of a radio base station apparatus including an internal interface conforming to the CPRI.

The radio base station apparatus shown in Fig. 1 includes radio equipment (RE) 1 which amplifies power for radio signals and which executes, for example, a frequency conversion between a radio signal and a baseband signal, radio equipment control 2 (REC) which manages radio resources and which executes modulation/demodulation processes and the like. Radio equipment 1 and radio equipment control 2 are connected together via an interface (CPRI Link) conforming to the CPRI.

The CPRI defines, as interfaces for connecting radio equipment 1 and radio equipment control 2 together, a physical layer (Layer 1) through which digitalized baseband signals, that are electric or optical signals, are transmitted and received, a data link layer (Layer 2) in which flow control, management of transmitted and received data, and the like are executed. In accordance with the CPRI, radio equipment 1 and radio equipment control 2 transmit and receive, to and from each other, IQ data (User) for each user, synchronizing signals (Sync.) used to transmit and receive digitalized baseband signals, and control and management data (Control & Mgmt.) that allow a CPRI link to be maintained.

To transmit and receive the IQ data (hereinafter referred to as user data) for each user as a digitalized baseband signal, radio equipment 1 and radio equipment control 2 form frames by consecutively arranging user data D_{MSB}, D₂, D₃, ..., D_{LSB} made up of a plurality of bits (for example, 10 bits) as shown in Fig. 2 and transmit and receive the user data frame by frame. A frame signal (10 bits) is located at the head of each of the frames in order to allow the boundary between the frames to be identified.

For example, if radio equipment 1 (transmission device) transmits transmission and reception target data (the frame) to radio equipment control 2 (reception device), radio equipment 1 converts and transmits the frame signal shown in Fig. 2 and the user data into respective serial signals. Radio equipment control 2 converts the serial signal transmitted by radio equipment 1 into a parallel signal. Radio equipment control 2 further separates the frame signal from the user data and demodulates the user data. This also applies to the case in which radio equipment control 2 transmits frames to radio equipment 1.

In the meantime, if various pieces of information are transmitted and received between radio equipment 1 and radio equipment control 2, a desired control signal for independent control may be transmitted and received and this signal is different from the control data specified in the CPRI or the like. To transmit and receive the desired control signal (digital signal), the following two methods can be used in general.
(a) Besides the interface defined in the CPRI or the like in order to allow each piece of information to be transmitted and received, a dedicated interface is provided for transmitting and receiving the control signal.
(b) The control signal is synthesized with the signal defined in the CPRI and transmitted and received between radio equipment 1 and radio equipment control 2, for example, with the frame composed of a plurality of user data.

For example, Japanese Patent Laid-Open No. 2002-351482 (hereinafter referred to as Patent Document 1), which belongs to a technical field different from that of the present invention, discloses a technique of replacing lower bits of a sound signal from the transmission device with data other than sounds (text information or the like); the reception device separates the data other than sounds from the received sound signal.

A new interface circuit and wiring for the interface are disadvantageously required for the method of providing the dedicated interface for transmitting and receiving the control signal, among the methods by which the radio equipment control and radio equipment transmit and receive the control signal as described above.

Furthermore, according to the method of synthesizing the control signal during the transmission and reception between the radio equipment control and the radio equipment, the synthesized signal used after the synthesis needs to be transmitted at a higher rate in order to maintain a signal bit rate used before the synthesis. The configuration of the interface circuit also needs to be changed so as to enable signals to be transmitted at the higher rate. This disadvantageously results in an expensive interface circuit.

The technique described in Patent Document 1 embeds data other than sounds in the sound signal. This disadvantageously limits the transmission rate of transmissible data other than the sound signal, preventing the technique from being applied directly to the control signal transmitted and received between the radio equipment control and the radio equipment. For example, the transmission rate of the sound signal is at most about 64 kbps. Embedding the control signal in the sound signal limits the transmission rate of the control signal to about several Kbps.

### DISCLOSURE OF THE INVENTION

An object of the present invention is to provide a serial signal transmission system of enabling a desired control signal to be transmitted and received between a transmission device and a reception device without the need to add an interface circuit or wiring or to increase the transmission rate.

To accomplish this object, the present invention allows a transmission device to replace the least significant bits of a plurality of transmission and reception target data with bit data of a desired control signal for transmission. On the other hand, a reception device extracts the bit data of the control signal from the respective least significant bits of the received transmission and reception target data.

The serial signal transmission system in accordance with the present invention enables the desired control signal to be transmitted and received without the need to add an interface circuit or an interface line or to increase the transmission rate. This makes it possible to prevent an increase in the costs of the transmission device and reception device provided in a radio base station apparatus to transmit and receive serial signals.

### BRIEF DESCRIPTION OF THE DRAWINGS

[Fig. 1] Fig. 1 is a block diagram showing the configuration of a radio base station apparatus including an internal interface conforming to the CPRI;
[Fig. 2] Fig. 2 is a schematic diagram showing the configuration of the format of conventional frames transmitted and received between radio equipment and radio equipment control;
[Fig. 3] Fig. 3 is a block diagram showing the configuration of the radio equipment to which a serial signal transmission system in accordance with the present invention is applied;
[Fig. 4] Fig. 4 is a block diagram showing the configuration of the radio equipment control to which the serial signal transmission system in accordance with the present invention is applied; and
[Fig. 5] Fig. 5 is a schematic diagram showing the configuration of the format of frames for use in the present invention which are transmitted and received between the radio equipment and the radio equipment control.

### BEST MODE FOR CARRYING OUT THE INVENTION

A serial signal transmission system in accordance with the present invention replaces the least significant bits (LSB) of a plurality of transmission and reception target data transmitted and received between radio equipment and radio equipment control both provided in a radio base station apparatus, with respective bit data of a control signal to transmit and receive the control signal. In this case, the LSBs of all the transmission and reception target data need not be replaced with the control signal. The radio equipment and the radio equipment control replace the LSBs of the transmission and reception target data with the control signal in accordance with a predetermined "period" or "rule".

Furthermore, the serial signal transmission system in accordance with the present invention uses a pseudo random signal such as a PN (Pseudo Noise) signal to scramble (encode) the control signal, which is a digital signal, and replaces the scrambled control signal with the LSBs of the transmission and reception target data.

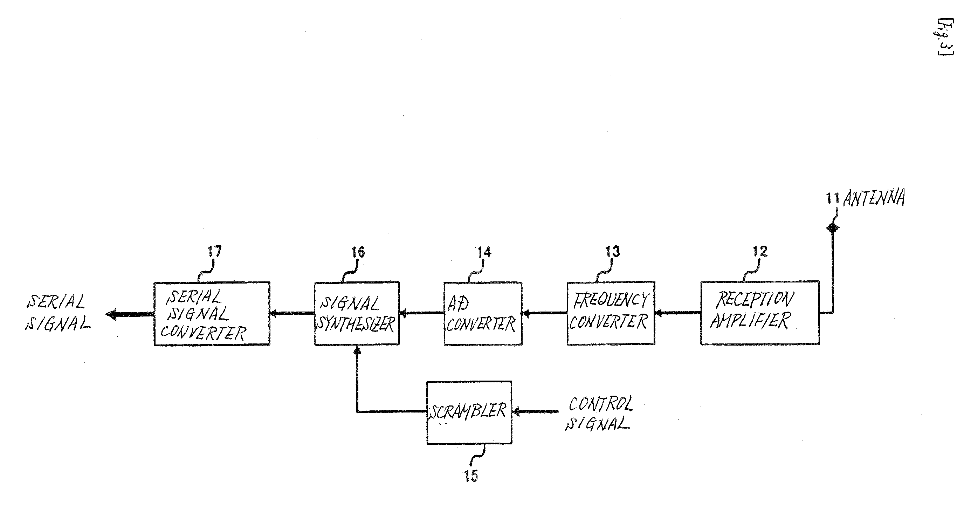

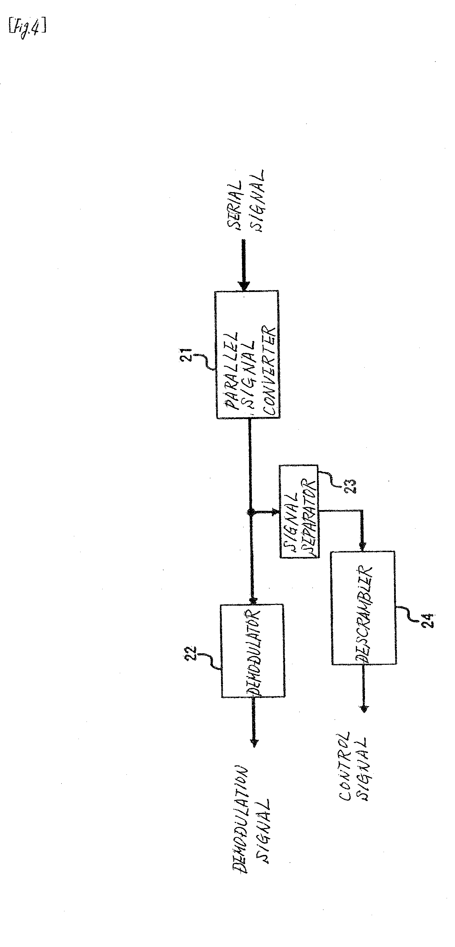

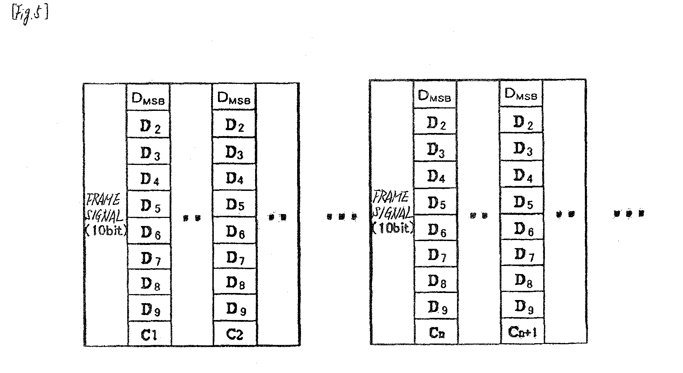

Fig. 3 is a block diagram showing the configuration of radio equipment to which the serial signal transmission system in accordance with the present invention is applied. Fig. 4 is a block diagram showing the configuration of the radio equipment control to which the serial signal transmission system in accordance with the present invention is applied. Fig. 5 is a schematic diagram showing the configuration of the format of frames for use in the present invention which are transmitted and received between the radio equipment and the radio equipment control.

As shown in Fig. 3, radio equipment includes antenna 11 that receives a radio signal, reception amplifier 12 that amplifies the signal received by antenna 11, frequency converter 13 that converts the frequency (radio frequency) of the signal output by reception amplifier 12 into the frequency of a baseband signal, AD converter 14 that converts the baseband signal (analog signal) output by frequency converter 13 into a digital signal, scrambler 15 that uses the pseudo random signal to scramble a desired control signal, signal synthesizer 16 which replaces the LSBs of user data (transmission and reception target data) in the digitalized baseband signal with the scrambled control signal and which adds a frame signal to the control signal to generate a frame, and serial signal converter 17 that converts the frame generated by signal synthesizer 16 into a serial signal.

As shown in Fig. 4, the radio equipment control includes parallel signal converter 21 that converts the serial signal transmitted by the radio equipment into a parallel signal to acquire the frame signal and the user data respectively, demodulator 22 that extracts the user data from an output signal from parallel signal converter 21 to demodulate the user data, signal separator 23 that separates the control signal from the output signal from parallel signal converter 21, and descrambler 24 that descrambles the control signal separated by signal separator 23 to reproduce the original unscrambled control signal.

Now, description will be given of the operation of the radio equipment, shown in Fig. 3, and of the radio equipment control, shown in Fig. 4.

A radio signal received by antenna 11 has the power thereof amplified by reception amplifier 12. The signal is then converted into an intermediate frequency signal by frequency converter 13. Here, it is assumed that the radio signal is converted directly into a baseband signal that is IQ data for each user.

The baseband signal (analog signal) output by frequency converter 13 is converted into a digital signal of k (for example, k=8 or 10) bits by AD converter 14. As shown in Fig. 2, the conventional serial signal transmission system adds a frame signal to a baseband signal (user data) converted into a digital signal to form a frame, converts the frame into a serial signal, and transmits the serial signal to the radio equipment control.

According to the present invention, as shown in Fig. 5, the LSBs (D_{LSB}) of a plurality of user data output by AD converter 14 are replaced with bit data C₁ to Cₙ₊₁ of a desired control signal, by signal synthesizer 16. In this case, the transmission rate of the control signal is one integral-number-th of the sampling frequency used for the AD conversion.

For the application target of the present invention, for example, radio equipment control and radio equipment provided in a radio base station apparatus based on a W-CDMA (Wideband Code Division Multiple Access) system, the data transmission rate is specified to be about 600 Mbps to 2.5 Gbps in the CPRI. A transmission rate of about several Mbps to about several tens of Mbps is normally sufficient for the control signal. Accordingly, the transmission rate required for the control signal can be achieved simply by replacing the LSBs of the user data, which have the smallest information amount in the output signal from AV converter 14, with bit data C₁ to Cₙ₊₁ of the control signal.

Signal synthesizer 16 need not replace the LSBs of all the user data (transmission and reception target data) output by AD converter 14 with bit data C₁ to Cₙ₊₁ of the control signal. Signal synthesizer 16 has only to replace the LSBs of the user data with bit data C₁ to Cₙ₊₁ of the control signal at every predetermined period. Receive signals for the radio equipment are normally mixed with noise. Thus, many of the LSBs of the user data obtained by subjecting the baseband signal to AD conversion may be considered to be noise components. Consequently, even when the LSBs of the user data are replaced with the bit data of the control signal, adverse effects on the user data are almost negligible.

Furthermore, to provide the control signal with randomness, scrambler 15 generates the pseudo random signal and uses the generated pseudo random signal to scramble each of bit data C₁ to Cₙ₊₁ of the control signal. Signal synthesizer 16 then inserts scrambled bit data C₁ to Cₙ₊₁ of the control signal into the respective LSBs of the plurality of user data.

For example, if bit data C₁ to Cₙ₊₁ of the control signal are consecutive 1 s or 0s, replacing the LSBs of the user data with the bit data of the control signal results in having DC components in a frame composed of the plurality of user data. The DC components reduce the S/N ratio of the user data. This degrades the clock extracting capability in the process of extracting a clock signal from a serial signal; this capability, or the demodulating capability of demodulator 22 in the radio equipment control, is required when parallel signal converter 21 in the radio equipment control converts the serial signal into a parallel signal.

The present invention uses the pseudo random signal to scramble the control signal, thus preventing possible consecutive 1s or 0s. This enables a reduction in DC components, thus preventing the clock extracting capability or the demodulating capability described above from being degraded.

An output signal (frame) from signal synthesizer 16 is converted into a serial signal by serial signal converter 17. The serial signal is transmitted to the radio equipment control.

In the radio equipment control, parallel signal converter 21 receives the serial signal transmitted by the radio equipment. Parallel signal converter 21 then converts the received serial signal into a parallel signal to acquire and supply a frame signal and user data to demodulator 22 and to signal separator 23.

Demodulator 22 extracts the user data from the output signal from parallel signal converter 21 and demodulates the user data to output the data as a demodulation signal. Signal separator 23 extracts the control signal from the LSBs of the user data contained in the output signal from parallel signal converter 21 and supplies the control signal to descrambler 24. Descrambler 24 uses the same pseudo random signal used by scrambler 15 in the radio equipment to descramble the control signal supplied by parallel signal converter 21. Descrambler 24 thus reproduces the original unscrambled control signal. At this time, descrambler 24 uses the frame signal specified in the CPRI to synchronize the pseudo random signal for use in the descramble process with the pseudo random signal used for the scramble process by means of scrambler 15.

The present invention replaces the LSBs of the plurality of transmission and reception target data with the bit data of the desired control signal for transmission and reception. This enables the desired control signal to be transmitted and received between the radio equipment control and the radio equipment without the need to increase the interface circuit or the interface line or to increase the transmission rate. This makes it possible to prevent an increase in the costs of the radio equipment control and the radio equipment.

In the above description, by way of example, the LSBs of the user data (transmission and reception target data) are replaced with the bit data of the control signal at every predetermined period. However, for example, user data having the largest amplitude may be extracted at every predetermined period so that only the LSB of the user data can be replaced with the bit data of the control signal. In this case, the LSB of the user data having the highest S/N ratio is replaced with the bit data of the control signal. This makes it possible to minimize the adverse effect of the replacement of the LSB of the user data with the control signal.

In the above description, by way of example, the radio equipment, the transmission device, transmit information to the radio equipment control, the reception device as specified in the CPRI. However, if the radio equipment control transmits information to the radio equipment as specified in the CPRI, effects similar to those described above can also be obtained provided that the radio equipment control, the transmission device, includes scrambler 15, signal synthesizer 16, and serial signal converter 17, and provided that the radio equipment, the reception device, includes parallel signal converter 21, signal separator 23, and descrambler 24.

Moreover, even if the serial signal is transmitted and received as specified in the OBSAI instead of the CPRI, effects similar to those described above can also be obtained provided that the transmission device includes scrambler 15, signal synthesizer 16, and serial signal converter 17, and provided that the reception device includes parallel signal converter 21, signal separator 23, and descrambler 24.

## Claims

1. A serial signal transmission system for transmitting and receiving a serial signal in accordance with a specification for an internal interface in a radio base station apparatus provided in a mobile communication system, the system comprising:
a transmission device including a signal synthesizer replacing the least significant bits of a plurality of transmission and reception target data that are digital signals, with bit data of a desired control signal that is a digital signal, and a serial signal converter converting an output signal from the signal synthesizer into a serial signal and transmitting the serial signal; and
a reception device including a parallel signal converter receiving the serial signal and converting the received serial signal into a parallel signal to acquire the transmission and reception target data, and a signal separator extracting bit data of the control signal from the respective least significant bits of the transmission and reception target data output by the parallel signal converter.

2. The serial signal transmission system according to claim 1, wherein the transmission device includes a scrambler for generating and using a pseudo random signal to scramble the control signal and for supplying the scrambled control signal to the signal synthesizer, and
the reception device includes a descrambler using the same pseudo random signal generated by the scrambler to descramble the control signal extracted by the signal separator, to reproduce the unscrambled control signal.

3. The serial signal transmission system according to claim 1, wherein the transmission device is radio equipment specified in CPRI that is a specification for the internal interface in the radio base station apparatus, and
the reception device is radio equipment control specified in the CPRI.

4. The serial signal transmission system according to claim 1, wherein the transmission device is radio equipment control specified in CPRI that is a specification for the internal interface in the radio base station apparatus, and
the reception device is radio equipment specified in the CPRI.

5. The serial signal transmission system according to claim 2, wherein the transmission device is radio equipment specified in CPRI that is a specification for the internal interface in the radio base station apparatus, and
the reception device is radio equipment control specified in the CPRI.

6. The serial signal transmission system according to claim 2, wherein the transmission device is radio equipment control specified in CPRI that is a specification for the internal interface in the radio base station apparatus, and
the reception device is radio equipment specified in the CPRI.

7. The serial signal transmission system according to claim 5 or 6, wherein the descrambler uses a frame signal specified in the CPRI to synchronize the pseudo random signal used for the descramble process with the pseudo random signal used for the scramble process by means of the scrambler.

8. The serial signal transmission system according to any one of claims 1 to 7, wherein the signal synthesizer replaces the least significant bits of the transmission and reception target data with bit data of the control signal at every predetermined period.

9. The serial signal transmission system according to any one of claims 1 to 7, wherein the signal synthesizer extracts the transmission and reception target data having the largest amplitude at every predetermined period to replace the least significant bits of the extracted transmission and reception target data with bit data of the control data.
